**Europäisches Patentamt**

**European Patent Office**

**Office européen des brevets**

(19)

(11) Veröffentlichungsnummer : **0 379 542 B1**

# EUROPÄISCHE PATENTSCHRIFT

(12)

(45) Veröffentlichungstag der Patentschrift :
**06.05.92 Patentblatt 92/19**

(21) Anmeldenummer : **89907073.4**

(22) Anmeldetag : **23.06.89**

(86) Internationale Anmeldenummer :
**PCT/DE89/00417**

(87) Internationale Veröffentlichungsnummer :
**WO 90/01111 08.02.90 Gazette 90/04**

(51) Int. Cl.⁵ : **F01P 7/16,** F01P 3/20,
F02B 29/04

(54) **EINRICHTUNG ZUM KÜHLEN EINER AUFGELADENEN KOLBENBRENNKRAFTMASCHINE.**

(30) Priorität : **19.07.88 DE 3824412**

(43) Veröffentlichungstag der Anmeldung :
**01.08.90 Patentblatt 90/31**

(45) Bekanntmachung des Hinweises auf die
Patenterteilung :
**06.05.92 Patentblatt 92/19**

(84) Benannte Vertragsstaaten :
**CH FR GB IT LI**

(56) Entgegenhaltungen :
**WO-A-80/00863**

(56) Entgegenhaltungen :
**DE-A- 2 120 790**
**DE-A- 3 226 883**
**DE-A- 3 708 351**
**FR-A- 2 341 041**
**GB-A- 2 178 157**
**US-A- 3 863 612**

(73) Patentinhaber : **MTU MOTOREN- UND
TURBINEN-UNION FRIEDRICHSHAFEN
GMBH
Olgastrasse 75 Postfach 20 40
W-7990 Friedrichshafen 1 (DE)**

(72) Erfinder : **DEUTSCHMANN, Herbert
Wachtelweg 9
W-7990 Friedrichshafen 5 (DE)**

EP 0 379 542 B1

Jouve, 18, rue Saint-Denis, 75001 PARIS

## Beschreibung

Die Erfindung bezieht sich auf eine Einrichtung zum Kühlen einer aufgeladenen Kolbenbrennkraftmaschine mit Ladeluftkühlung und einem Kühlmittelrückkühler. Der Zweck einer derartigen Einrichtung ist es, den störungsfreien Betrieb der Kolbenbrennkraftmaschine bei wechselnden Belastungen und Umgebungsbedingungen zu gewährleisten.

Aus der DE 21 20 790 B2 ist eine gattungsgemäße Einrichtung bekannt, die für die Ladeluftkühlung und die Maschinenkühlung getrennten Kühlmittelkreisläufe aufweist. Die Temperaturen in den beiden Kreisläufen können dadurch unbeeinflußt voneinander entsprechend den Bauteilerfordernissen unterschiedlich gewählt werden. Diese Möglichkeit ist jedoch mit einem Mehraufwand an Bauteilen erkauft. So müssen in beiden Kühlmittelkreisläufen Baugruppen wie Sicherheitseinrichtung, Regeleinrichtung, Kühlmittelpumpe, Ausgleichsbehälter, Einfüllstutzen doppelt vorhanden sein. Dadurch erhöhen sich Gewicht, Bauvolumen und Kosten einer derart ausgerüsteten Kolbenbrennkraftmaschine. Einen Doppelaufwand enthält zusätzlich der Kühlmittelkreislauf für die Ladeluftkühlung, der zwischen Umwälzpumpe und Ladeluftkühler in zwei parallele, je für sich regelbare Leitungen aufgeteilt ist. Das Regelventil der einen Leitung ist temperaturgesteuert und das Regelventil der anderen Leitung ladeluftdruckabhängig gesteuert.

Es ist Aufgabe der Erfindung, eine Einrichtung zum Kühlen einer aufgeladenen Kolbenbrennkraftmaschine zu schaffen, die bei geringem Teileaufwand für die Einrichtung eine den Erfordernissen der Kolbenbrennkraftmaschinen-Bauteile angepaßte Kühlung in allen Betriebsbereichen erlaubt.

Diese Aufgabe wird erfindungsgemäß mit den kennzeichnenden Merkmalen des Patentanspruches gelöst.

Die mit der Erfindung erzielten Vorteile bestehen insbesondere darin, daß der Teileaufwand für die Einrichtung gegenüber bekannten Anordnung reduziert ist, daß trotz der miteinander kommunizierenden Kreislaufzweige die Absenkung der Ladelufttemperatur auf das durch den Kühlmittelrückkühler mögliche Minimum ohne Beschränkung durch die Mindesttemperatur des Kühlmittels am Eintritt in die Kolbenbrennkraftmaschine möglich ist, und daß durch die ladeluftdruckabhängige Übersteuerung der Umschalteinrichtung eine auf eine Lastaufschaltung der Kolbenbrennkraftmaschine schnell reagierende Regelung des Kühlmittelkreislaufes geschaffen ist.

Ein Ausführungsbeispiel der Erfindung wird an Hand der Zeichnung näher beschrieben. Es zeigen:

Fig. 1 Kühlmittelkreislauf einer aufgeladenen Kolbenbrennkraftmaschine in schematischer Darstellung;

Fig. 2 Umschalteinrichtung.

Eine Einrichtung zum Kühlen einer aufgeladenen Kolbenbrennkraftmaschine 10 weist einen geschlossenen, aus drei Kreislaufzweigen bestehenden Kühlmittelkreislauf mit einer gemeinsamen Kühlmittelpumpe 11 auf. Der Kreislaufzweig für die Maschinenkühlung besteht aus der Kühlmittelausgangsleitung 18 der Kolbenbrennkraftmaschine 10, der Ladeluftkühler-Umgehungsleitung 19, der Kühlmittelpumpenleitung 20 und der Kühlmitteleingangsleitung 21 der Kolbenbrennkraftmaschine 10. Der zweite Kreislaufzweig, der der Ladeluftkühlung dient, besteht aus der Kühlmitteleingangsleitung 22 des Ladeluftkühlers 13 sowie der mit der Kühlmittelpumpenleitung 20 und der Ladeluftkühler-Umgehungsleitung 19 verbundenen Kühlmittelausgangsleitung 23, in die noch ein Schmierölkühler 15 eingebunden ist. Der dritte Kreislaufzweig weist einen mit kaltem Fremdwasser betriebenen Kühlmittelrückkühler 14, eine von der Kühlmittelpumpenleitung 20 ausgehende Kühlmitteleingangsleitung 24 und eine Kühlmittelausgangsleitung 25 des Kühlmittelrückkühlers 14 auf.

Die drei Kreislaufzweige werden beherrscht durch eine Umschalteinrichtung 12, die die Kühlmittelausgangsleitung 18 der Kolbenbrennkraftmaschine 10, die Ladeluftkühler-Umgehungsleitung 19, die Kühlmitteleingangsleitung 22 des Ladeluftkühlers 13 und die Kühlmittelausgangsleitung 25 des Kühlmittelrückkühlers 14 miteinander verbindet.

Die Kühlmitteleingangsleitung 21 der Kolbenbrennkraftmaschine 10 ist durch einen Wärmetauscher 16 geführt, der über eine Eingangsleitung 26 mit einem in der Ladeluftkühler-Umgehungsleitung 19 angeordneten Thermostatventil 17 verbunden ist.

Die Ausgangsleitung 27 des Wärmetauschers 16 ist stromab des Thermostatventils 17 an die Ladeluftkühler-Umgehungsleitung 19 angeschlossen.

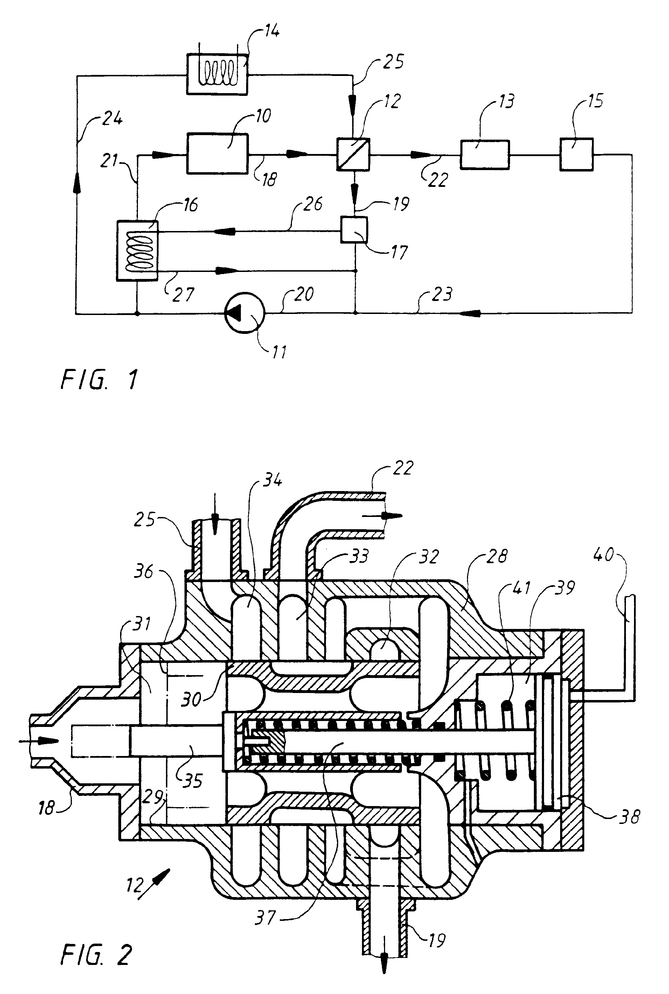

Die in Fig. 2 dargestellte Umschalteinrichtung 12 besteht aus einem Gehäuse 28 mit den Anschlüssen für die Kühlmittelleitungen 18, 19, 22, 25 der drei Kreislaufzweige und einem in einer Bohrung 29 verstellbaren Schieber 30, der die jeder Kühlmittelleitung 18, 19, 22, 25 zugeordnete Steuerkammer 31, 32, 33, 34 beherrscht. Durch ein in der Steuerkammer 31 für die Kühlmittelausgangleitung 18 der Kolbenbrennkraftmaschine 10 angeordnetes und mit dem Schieber 30 verbundenes temperaturempfindliches Element 35 ist der Schieber 30 in ABhängigkeit der Kühlmitteltemperatur der Kolbenbrennkraftmaschine 10 verstellbar. Die gezeichnete Stellung des Schiebers 30 entspricht dem Zustand bei stillstehender Kolbenbrennkraftmaschine 10 sowie bei kleiner Tellast und niedriger Umgebungstemperatur. Der dritte Kreislaufzweig zum Kühlmittelrückkühler 14 und die Ladeluftkühler-Umgehungsleitung 19 sind dann gesperrt. Die Abwärme der Kolbenbrenn-

2

kraftmaschine 10 wird in diesem Fall im Ladeluftkühler 13 an die Ladeluft abgegeben. Damit ergibt sich erwünschterweise eine hohe Ladelufttemperatur bei kleiner Teillast. Bei Vollast der Kolbenbrennkraftmaschine 10, wenn das Kühlmittel in der Kühlmittelausgangsleitung 18 die höchste Temperatur erreicht, nimmt der Schieber 30 die strichpunktiert angedeutete Stellung 36 ein.

Das temperaturempfindliche Element 35 stützt sich an der Kolbenstange 37 eines in einem Zylinder 39 verschiebbaren Kolbens 38 ab, der durch eine Leitung 40 mit Ladeluftdruck der Kolbenbrennkraftmaschine 10 beaufschlagbar ist.

Bei Leerlauf und kleiner Teillast, wenn kein nennenswerter Ladeluftdruck der Kolbenbrennkraftmaschine 10 vorhanden ist, nimmt der Schieber 30 gesteuert durch das temperaturempfindliche Element 35 eine Zwischenstellung ein, bei der die gesamte von der Kolbenbrennkraftmaschine 10 kommende Kühlmittelmenge durch den Ladeluftkühler geführt wird. In der Umschalteinrichtung 12 wird eine kleine vom Kühlmittelrückkühler kommende Kühlmittelmenge zugemischt, so daß sich eine an der zulässigen Obergrenze liegende Kühlmitteltemperatur der Kühlmittelausgangsleitung der Kolbenbrennkraftmaschine 10 ergibt und die Ladelufttemperatur nach Ladeluftkühler 13 gegenüber Vollastbetrieb angehoben ist.

Mit steigender Belastung der Kolbenbrennkraftmaschine 10 steigt der Ladeluftdruck an. Durch den am Kolben 38 anstehenden Ladeluftdruck wird nach Überschreiten einer mit der Druckfeder 41 eingestellten Gegenkraft der Schieber 30 unabhängig vom temperaturempfindlichen Element 35 verschoben. Der Regelbereich der Umschalteinrichtung 12 verschiebt sich dadurch in einen Temperaturbereich, der ohne Ladeluftdruckbeeinflussung erst bei höherem Temperaturniveau des Kühlmittels der Kolbenbrennkraftmaschine 10 erreicht würde. Die Ladeluftkühlung wird dadurch intensiviert, da dem zum Ladeluftkühler 18 gelangenden Kühlmittel eine größere Menge des vom Kühlmittelrückkühler 14 kommenden kalten Kühlmittels zugemischt wird. Gleichzeitig gelangt ungekühltes Kühlmittel aus der Steuerkammer 31 in die Steuerkammer 32 und damit in die Ladeluftkühler-Umgehungsleitung 19.

Die Mischung der Kühlmittelströme aus der Ladeluftkühler-Umgehungsleitung 19 und aus der Ladeluftkühlerausgangsleitung 23 hebt die Temperatur des Kühlmittels vor der Kühlmittelpumpe 11 an. Stellt sich trotzdem in der Kühlmitteleingangleitung 21 der Kolbenbrennkraftmaschine 10 eine zu niedrige Kühlmitteltemperatur ein, spricht das Thermostatventil 17 an. Der Wärmetauscher 16 wird dann mit ungekühltem Kühlmittel aus der Ladeluftkühler-Umgehungsleitung 19 beaufschlagt, wodurch die Kühlmitteltemperatur in der Kühlmitteleingangleitung 21 angehoben wird.

Bei einer Lastaufschaltung auf hohe Leistungswerte der Kolbenbrennkraftmaschine 10 steigt der Ladeluftdruck rascher als die Kühlmitteltemperatur in der Kühlmittelausgangsleitung 18 der Kolbenbrennkraftmaschine 10. Durch den mit Ladeluftdruck beaufschlagten Kolben 38 wird die deshalb nachhinkende, temperaturgesteuerte Verstellung des Schiebers 30 überlagert und sofort kompensiert. Der Kühlmittelkreislauf ist damit schon auf die mit der erhöhten Leistungsabgaben der Kolbenbrennkraftmaschine 10 zu erwartende größere Abwärmemenge eingestellt, bevor sich dies am temperaturempfindlichen Element 35 bemerkbar macht. Gleichzeitig ist aber sofort die maximal mögliche Ladeluftkühlung wirksam, da dem Ladeluftkühler 13 nur gekühltes Kühlmittel aus dem Kühlmittelrückkühler 14 zugeführt wird.

## Patentansprüche

1. Einrichtung zum Kühlen einer aufgeladenen Kolbenbrennkraftmaschine (10), die mit einem Ladeluft- und einem Kühlmittelrückkühler (13, 14) ausgestattet ist und einen geschlossenen, mehrere Kreislaufzweige umfassenden Kühlmittelkreislauf mit einer gemeinsamen Kühlmittelpumpe (11) aufweist, wobei die Kreislaufzweige von einer temperaturabhängigen Ventileinrichtung (12) beherrscht werden, die die Kühlmittelausgangsleitungen (18, 25) der Kolbenbrennkraftmaschine (10) und des Kühlmittelrückkühlers (14) sowie die Kühlmitteleingangsleitung (22) des Ladeluftkühlers (13) miteinander verbindet, und für den Ladeluftkühler (13) eine Umgehungsleitung (19) angeordnet ist, dadurch gekennzeichnet, daß der Kühlmittelrückkühler (14) im Nebenschluß zur Kolbenbrennkraftmaschine (10) angeordnet ist, daß die temperaturabhängige Ventileinrichtung (12) eine ladeluftdruck-beaufschlagbare Steuereinrichtung aufweist, die der thermostatischen Steuerung in Öffnungsrichtung überlagert ist und daß in der Kühlmitteleingangsleitung (21) der Kolbenbrennkraftmaschine (10) ein Wärmetauscher (16) angeordnet ist, der über ein Thermostatventil (17) aus der Ladeluftkühler-Umgehungsleitung (19) mit Kühlmittel beaufschlagbar ist.

## Claims

1. An apparatus for cooling a supercharged reciprocating internal-combustion engine (10), which is provided with an air-charge intercooler (13) and a coolant recooler (14), and has a closed coolant circuit comprising a plurality of branch circuits with a common coolant pump (11), wherei the branch circuits are controlled by a temperature-dependent valve means (12) which interconnects the coolant outlet lines (18, 25) of the reciprocating internal-combustion engine (10) and of the coolant recooler (14), and also the coolant inlet line (22) of the air-charge intercooler (13), and a by-pass line (19) is provided for the air-charge intercooler (13), characterised in that the coolant recooler (14) is arranged in a shunt circuit in relation to the reciprocating internal-combustion engine (10), in that the temperature-dependent valve means (12) has a control device which can be acted upon by air-charge pressure and which overrides the thermostatic control in the opening direction, and in that in the coolant inlet line (21) of the reciprocating internal-combustion engine (10) a heat exchanger (16) is provided on which coolant from the air-charge intercooler by-pass line (19) can act via a thermostatic valve (17).

## Revendications

1. Dispositif de refroidissement d'un moteur (10) à combustion interne à pistons, dispositif qui est équipé d'un dispositif (13) de refroidissement d'air de suralimentation et d'un dispositif (14) de refroidissement de fluide de refroidissement, et qui présente un circuit fermé de fluide de refroidissement comprenant plusieurs branches de circuit et qui est doté d'une pompe (11) commune pour le fluide de refroidissement, les branches de circuit étant commandées par un dispositif de valve (12) dépendant de la température qui relie entre eux les conduits (18, 25) de sortie du fluide de refroidissement du moteur(10)à combustion interne à pistons et du dispositif (14) de refroidissement de fluide de refroidissement ainsi que le conduit (22) d'entrée de fluide de refroidissement du dispositif (13) de refroidissement de l'air de suralimentation et un conduit (19) de bipasse étant mis en place pour contourner le dispositif (13) de refroidissement de l'air de suralimentation, caractérisé en ce que ce dispositif (14) de refroidissement de l'air de suralimentation est disposé en dérivation par rapport au moteur(10)de combustion interne à pistons, en ce que le dispositif (12) de valve dépendant de la température présente un élément de commande susceptible d'être placé sous la contrainte de la pression de l'air de suralimentation, qui est monté en plus de la commande thermostatique dans le sens de l'ouverture, et en ce que, dans le conduit (21) d'entrée de fluide de refroidissement du moteur (10) à combustion interne à pistons est disposé un échangeur (16) de chaleur, qui peut être placé, par l'intermédiaire d'une valve thermostatique (17) sous la contrainte de fluide de refroidissement provenant du conduit (19) de contournement du dispositif de refroidissement d'air de suralimentation.

FIG. 1

FIG. 2